# EUROPÄISCHE PATENTSCHRIFT

(11) **EP 4 249 848 B1**
(45) Veröffentlichungstag und Bekanntmachung des Hinweises auf die Patenterteilung: **09.07.2025**
(21) Anmeldenummer: 22163634.3
(22) Anmeldetag: 22.03.2022
(51) Int. Cl.: G01B 7/14, G01B 7/16, E21D 21/02

(54) **MESSVORRICHTUNG UND -VERFAHREN**
MEASURING DEVICE AND METHOD
DISPOSITIF ET PROCÉDÉ DE MESURE

(43) Veröffentlichungstag der Anmeldung: 27.09.2023
(73) Patentinhaber: Aartesys AG, 2502 Biel-Bienne (CH)
(72) Erfinder: SCOSSA-ROMANO, Enzo, 6713 Serravalle (CH); VON KÄNEL, Martin, 3250 Lyss (CH)
(74) Vertreter: Bauer, Dirk

(56) Entgegenhaltungen:
- EP-A1- 3 358 331
- WO-A1-2014/129742
- CN-A- 106 500 959
- CN-U- 209 727 633
- DE-U1- 202016 004 348
- DE-U1- 202017 100 560
- JP-A- H1 163 908
- US-A1- 2016 252 197

## Beschreibung

Die Erfindung betrifft zunächst eine Messvorrichtung mit zwei Felsankern und einem mit einem Verlängerungselement zwischen den Felsankern angebrachten Linearpotentiometer, dass eine Längenänderung in einer geraden Verbindungslinie zwischen den Felsankern misst. Die Erfindung betrifft weiterhin ein mit einer solchen Messvorrichtung auszuführendes Messverfahren.

Solche Messvorrichtungen und -verfahren werden genutzt, um kleine Felsverschiebungen über lange Zeiträume zu erkennen. Das Verlängerungselement überbrückt eine über die Länge des Linearpotentiometers hinausgehende Distanz zwischen den Referenzpunkten. Die Messvorrichtung ist so für Messungen über Distanzen von 30 cm bis zu 3 m einsetzbar. Die bekannten Messvorrichtungen weisen Verlängerungselemente aus Aluminium auf, deren Längenänderung unter Temperatureinfluss umständlich herausgerechnet, oder anhand einer ausreichend langen Messdatenreihe von der effektiven Felsbewegung unterschieden werden muss.

Des Weiteren beschreibt CN209727633U eine Messvorrichtung zur Messung einer Längenänderung eines Bauteiles aus Beton.

### Aufgabe

Der Erfindung liegt die Aufgabe zugrunde, die Messvorrichtung gegen Temperatureinflüsse unempfindlicher zu gestalten.

### Lösung

Ausgehend von der bekannten Messvorrichtung wird nach der Erfindung vorgeschlagen, dass das Verlängerungselement aus einem Karbonkomposit besteht. In der erfindungsgemäßen Messvorrichtung vereint das Verlängerungselement eine hohe mechanische Stabilität und Steifigkeit mit einer vernachlässigbaren Wärmeausdehnung in dem für Felsbewegungen relevanten Temperaturbereich zwischen -30 und +50 °C: Karbonkomposit weist beispielsweise gegenüber Aluminium einem um den Faktor 240 kleineren Wärmeausdehnungskoeffizienten auf.

Die erfindungsgemäße Messvorrichtung weist an den Felsankern genormte Zapfen, insbesondere Leicazapfen auf, sowie zwei mit dem Linearpotentiometer verbundene Adapter für die Zapfen. In einer solchen Messvorrichtung können die Felsanker unabhängig von dem Linearpotentiometer an den Referenzstellen für die Messung im Fels angebracht und das Linearpotentiometer anschließend aufgesetzt und von den Felsankern auch leicht wieder gelöst werden, ohne die Reproduzierbarkeit der Messung zu beeinträchtigen. Die Messung kann so außerdem leicht mit anderen Messsystemen (beispielsweise Laserreflektoren, mechanische Messmittel oder Theodoliten) überprüft oder kalibriert werden.

Vorzugsweise weist eine solche erfindungsgemäße Messvorrichtung Innengewinde in den Felsankern auf, wobei die Zapfen in die Innengewinde geschraubt sind. Die Zapfen bleiben auf den Felsankern angeschraubt und werden danach nicht mehr entfernt.

Die erfindungsgemäße Messvorrichtung weist je ein Kugelgelenk zwischen dem Linearpotentiometer und den Felsankern auf. Die gelenkige Verbindung zwischen dem Linearpotentiometer und den Felsankern vermeidet in einer solchen Messvorrichtung Querspannungen im Linearpotentiometer und daraus resultierende Beeinträchtigungen der Messung infolge von nicht in der Verbindungslinie liegenden Verschiebungen der Referenzpunkte.

Vorzugsweise weist eine erfindungsgemäße Messvorrichtung ein Kommunikationselement auf, dem das Linearpotentiometer die Längenänderung drahtgebunden übermittelt, und das über eine Funkverbindung eine Mitteilung über die Längenänderung versendet. Ein solches Kommunikationselement ist aus dem Programm der Anmelderin unter der Produktbezeichnung Aartelink bekannt. Ausgehend von dem bekannten Messverfahren wird nach der Erfindung vorgeschlagen, dass das Verlängerungselement aus einem Karbonkomposit besteht. Das erfindungsgemäße Messverfahren ist insbesondere mit einer erfindungsgemäßen Messvorrichtung ausführbar und zeichnet sich gleichermaßen durch deren vorstehend genannte Vorteile aus.

Vorzugsweise werden in einem erfindungsgemäßen Verfahren die Felsanker an den Referenzpunkten in den Fels geklebt. Die Nutzung geklebter Felsanker ist in der Praxis weit verbreitet und bewährt.

### Ausführungsbeispiel

Die Erfindung wird nachfolgend anhand eines Ausführungsbeispiels erläutert. Es zeigen
- Fig. 1: eine erfindungsgemäße Messvorrichtung und
- Fig. 2: eine Anwendung der Messvorrichtung.

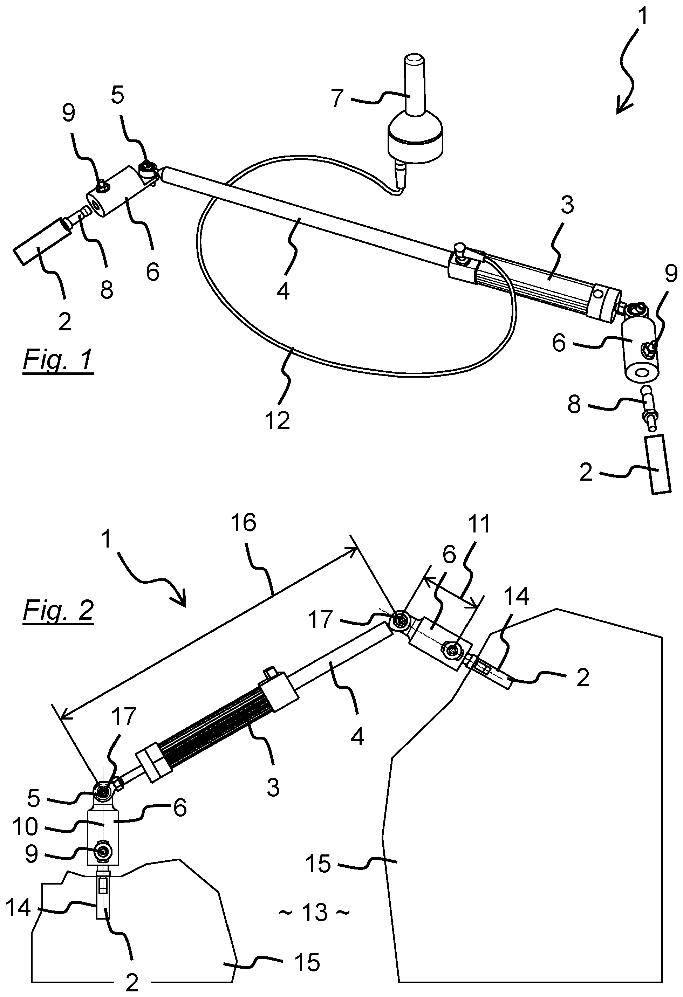

Die in Figur 1 gezeigte erfindungsgemäße Messvorrichtung 1 besteht aus zwei Felsankern 2, einem Linearpotentiometer 3 mit einem Verlängerungselement 4 und zwei über je ein Kugelgelenk 5 daran angebrachten Adaptern 6 sowie einem Kommunikationselement 7.

Als Felsanker 2 kommen Innengewindehülsen V-IG M 8 A4 der MKT Weilerbach/DE zum Einsatz, in die jeweils ein Zapfen 8 - hier: ein Leicazapfen - eingeschraubt ist.

Das Linearpotentiometer 3 ist ein Präzisions-Linearpotentiometer Modell LZW-IP der WayCon GmbH, Taufkirchen/DE mit einer Messstrecke von 50 mm. Das Verlängerungselement 4 ist ein Karbonkompositstab mit einem Durchmesser von 20 mm. Das vorkonfektionierte Verlängerungselement 4 ist an beiden Enden mit nicht dargestellten, 3D-gedruckten Karbon-Gewindebuchsen derart verklebt, dass der Leim die Enden galvanisch gegeneinander isoliert.

Die Adapter 6 sind Stahlhülsen mit einer Länge von 95 mm und einem Durchmesser von 35 mm und sind mit einer Klemmschraube 9 an den Zapfen 8 fixierbar. Die Gelenkpunkte der Kugelgelenke 5 nach DIN 648 in Größe M8 liegen auf der Längsachse 10 der Zapfen 8 und weisen einen Abstand 11 von 60 mm von deren Kopf auf und bilden die Messpunkte der Messvorrichtung 1.

Das Kommunikationselement 7 ist ein Universalsensor Modellbezeichnung Aartelink der Anmelderin als Datenlogger mit Batterie und Fernkommunikationseinrichtung. Das Kommunikationselement 7 ist über einen M12 Stecker Schutzart IP68 mit einem vierpoligen Kabel 12 mit Nagerschutz mit dem Linearpotentiometer 3 verbunden.

Zur Anwendung der erfindungsgemäßen Messvorrichtung 1 und Ausführung des erfindungsgemäßen Verfahrens an einer Felsspalte 13 werden die Felsanker 2 in Bohrungen 14 in den gegenüberliegenden Felsen 15 eingeklebt und die Zapfen 8 in die Felsanker 2 eingeschraubt und das Kommunikationselement 7 in einer nicht dargestellten dritten Bohrung verankert.

Das passend vorkonfektionierte Verlängerungselement 4 wird mit dem Linearpotentiometer 3 verbunden. Dann wird das Linearpotentiometer 3 mit den Adaptern 6 auf die Zapfen 8 aufgesetzt, mit den Klemmschrauben 9 fixiert und über das Kabel 12 mit dem Kommunikationselement 7 verbunden.

Das Kommunikationselement 7 detektiert Spannungsänderungen am Linearpotentiometer 3, berechnet daraus eine Längenänderung zwischen den Felsankern 2, vergleicht diese mit intern abgespeicherten, veränderbaren Schwellwerten, kommuniziert bei deren Überschreitung die Messwerte über eine Kurzstreckenfunkverbindung zu einem nachgelagerten Gateway und von dort aus über eine drahtgebundene oder drahtlose Mobilfunkverbindung zum AarteLink Applikationsserver. Zur Überwachung der Funktionstüchtigkeit der Messvorrichtung 1 wird stündlich ein "Lebenszeichen" zu dem nachgelagerten Gateway geschickt, das auch die zu diesem Zeitpunkt im Kommunikationselement gemessene Temperatur enthält. Auf dem Applikationsserver wird aus einem vorbekannten Wert und der Längenänderung der jeweils aktuelle Abstand 16 der Referenzpunkte 17 berechnet und dargestellt. Das Gateway und der Applikationsserver sind nicht dargestellt. Die Batterie des Kommunikationselements 7 weist eine Lebensdauer von zehn Jahren auf.

In den Figuren sind
- 1: Messvorrichtung
- 2: Felsanker
- 3: Linearpotentiometer
- 4: Verlängerungselement
- 5: Kugelgelenk
- 6: Adapter
- 7: Kommunikationselement
- 8: Zapfen
- 9: Klemmschraube
- 10: Längsachse
- 11: Abstand
- 12: Kabel
- 13: Felsspalte
- 14: Bohrung
- 15: Felsen
- 16: Abstand
- 17: Messpunkt

## Patentansprüche

1. Messvorrichtung (1) mit zwei Felsankern (2) und einem mit einem Verlängerungselement (4) zwischen den Felsankern (2) angebrachten Linearpotentiometer (3), das eine Längenänderung in einer geraden Verbindungslinie zwischen den Felsankern (2) misst, wobei das Verlängerungselement (4) aus einem Karbonkomposit besteht, **gekennzeichnet durch** genormte Zapfen (8) an den Felsankern (2) und zwei Adapter (6) für die Zapfen, wobei die Adapter über je ein Kugelgelenk (5) mit dem Linearpotentiometer (3) verbunden sind.

2. Messvorrichtung (1) nach dem vorgenannten Anspruch, ***gekennzeichnet durch*** Innengewinde in den Felsankern (2), wobei die Zapfen (8) in die Innengewinde geschraubt sind.

3. Messvorrichtung (1) nach einem der vorgenannten Ansprüche, ***gekennzeichnet durch*** ein Kommunikationselement (7), dem das Linearpotentiometer (3) die Längenänderung drahtgebunden übermittelt, und das über eine Funkverbindung eine Mitteilung über die Längenänderung versendet.

4. Messverfahren, wobei an zwei Referenzpunkten (17) je ein Felsanker (2) angebracht wird und ein mit einem Verlängerungselement (4) zwischen den Felsankern (2) angebrachtes Linearpotentionmeter (3) in einer geraden Verbindungslinie zwischen den Felsankern (2) eine Längenänderung misst, wobei das Verlängerungselement (4) aus einem Karbonkomposit besteht, **dadurch gekennzeichnet, dass** an den Felsankern (2) genormte Zapfen sind und dass zwei Adapter (6) für die Zapfen (8) über je ein Kugelgelenk (5) mit dem Linearpotentiometer (3) verbunden sind.

5. Messverfahren nach dem vorgenannten Anspruch, ***dadurch gekennzeichnet, dass*** die Felsanker (2) an den Referenzpunkten (17) in Fels geklebt werden.

## Claims

1. A measuring device (1) with two rock anchors (2) and a linear potentiometer (3) mounted with an extension element (4) between the rock anchors (2), which measures a change in length in a straight connecting line between the rock anchors (2), wherein the extension element (4) consists of a carbon composite, **characterised by** standardised pins (8) on the rock anchors (2) and two adapters (6) for the pins, wherein the adapters are each connected via a ball joint (5) to the linear potentiometer (3).

2. The measuring device (1) according to the preceding claim, **characterised by** internal threads in the rock anchors (2), wherein the pins (8) are screwed into the internal threads.

3. The measuring device (1) according to any one of the preceding claims, **characterised by** a communication element (7), to which the linear potentiometer (3) transmits the change in length by wire, and which sends a message about the change in length by means of a radio link.

4. A method of measurement, wherein a rock anchor (2) is attached at each of two reference points (17) and a linear potentiometer (3) attached with an extension element (4) between the rock anchors (2) measures a change in length in a straight connecting line between the rock anchors (2), wherein the extension element (4) consists of a carbon composite, **characterised in that** standardised pins are on the rock anchors (2) and that two adapters (6) for the pins (8) are each connected via a ball joint (5) to the linear potentiometer (3).

5. The method of measurement according to the preceding claim, **characterised in that** the rock anchors (2) are glued into rock at the reference points (17).

## Revendications

1. Dispositif de mesure (1) avec deux ancrages de roche (2) et un potentiomètre linéaire (3) monté avec un élément de prolongement (4) entre les ancrages de roche (2), qui mesure une variation de longueur dans une ligne de liaison droite entre les ancrages de roche (2), sachant que l'élément de prolongement (4) est fait d'un composite à base de carbone, **caractérisé par** des axes normalisés (8) sur les ancrages de roche (2) et deux adaptateurs (6) pour les axes, sachant que les adaptateurs sont reliés respectivement par un joint à rotule (5) au potentiomètre linéaire (3).

2. Dispositif de mesure (1) selon la revendication précédente, **caractérisé par** un filetage intérieur dans les ancrages de roche (2), sachant que les axes (8) sont vissés dans le filetage intérieur.

3. Dispositif de mesure (1) selon l'une quelconque des revendications précédentes, **caractérisé en ce qu'**un élément de communication (7) transmet par fil la variation de longueur au potentiomètre linéaire (3) et envoie une information sur la variation de longueur par une liaison radio.

4. Procédé de mesure, sachant qu'aux deux points de référence (17) est respectivement monté un ancrage de roche (2) et un potentiomètre linéaire (3) monté avec un élément de prolongement (4) entre les ancrages de roche (2) mesure une variation de longueur dans une ligne de liaison droite entre les ancrages de roche (2), sachant que l'élément de prolongement (4) est fait d'un composite à base de carbone, **caractérisé en ce que** des axes normalisés se trouvent sur les ancrages de roche (2) et **en ce que** deux adaptateurs (6) pour les axes (8) sont reliés respectivement par un joint à rotule (5) au potentiomètre linéaire (3).

5. Procédé de mesure selon la revendication précédente, **caractérisé en ce que** les ancrages de roche (2) sont collés aux points de référence (17) dans la roche.
